# FASCICULE DE BREVET EUROPEEN

(11) **EP 3 870 998 B1**
(45) Date de publication et mention de la délivrance du brevet: **24.07.2024**
(21) Numéro de dépôt: 19784103.4
(22) Date de dépôt: 16.10.2019
(51) Int. Cl.: G01S 7/52, G10K 11/00, B06B 1/06

(54) **ANTENNE D'EMISSION ACOUSTIQUE**
AKUSTISCHE SENDEANTENNE
ACOUSTIC TRANSMITTING ANTENNA

(30) Priorité: 22.10.2018 FR 1801114
(43) Date de publication de la demande: 01.09.2021
(73) Titulaire: THALES, 92190 Meudon (FR)
(72) Inventeur: LAGIER, Yves, 06903 SOPHIA ANTIPOLIS (FR); LARDAT, Raphaël, 06903 SOPHIA ANTIPOLIS (FR); TODESCO, Jérémie, 06903 SOPHIA ANTIPOLIS (FR)
(74) Mandataire: Atout PI Laplace
(86) Numéro de dépôt international: PCT/EP2019/078083
(87) Numéro de publication internationale: WO 2020/083724

(56) Documents cités:
- EP-A2- 2 388 079
- US-A1- 2002 043 897
- US-A1- 2002 159 336
- US-A1- 2016 193 629
- LI SHI-PING ET AL: "The simulation design of low frequency broadband transmit-receive transducer with composite fluid cavity", 2017 SYMPOSIUM ON PIEZOELECTRICITY, ACOUSTIC WAVES, AND DEVICE APPLICATIONS (SPAWDA), IEEE, 27 October 2017 (2017-10-27), pages 265 - 267, XP033347817, DOI: 10.1109/SPAWDA.2017.8340336

## Description

L'invention concerne les antennes d'émission acoustique, en particulier les antennes d'émission acoustique dans le domaine des systèmes basses et moyennes fréquences et un procédé d'étalonnage d'une telle antenne. L'invention s'applique en particulier, mais non de manière limitative, aux sonars à immersion variable. Elle peut s'appliquer également à d'autres types de sonar comme par exemple les sonars à antenne fixe, de protection ou portuaires.

Les plateformes marines sont généralement équipées d'antennes sonar immergées pour détecter et/ou situer des objets sous l'eau. Une antenne sonar comprend un ensemble de transducteurs empilés assurant l'émission des signaux acoustiques et montés sur un support. La réception des signaux est effectuée par un ensemble de récepteurs, comme des hydrophones, agencés selon une configuration choisie par rapport à la configuration de l'ensemble des transducteurs d'émission.

Les antennes existantes pour l'émission SONAR (« Sound Navigation And Ranging ») à immersion variable sont réalisées selon différentes architectures.

Des antennes de forme plane constituées d'un réseau de transducteurs élémentaires peuvent être utilisées. Ces antennes réalisent l'émission des signaux SONAR. Leurs transducteurs sont souvent de type Tonpilz, ce qui les rend encombrantes et lourdes. Les transducteurs Tonpilz nécessitent, en effet, d'équiper l'élément actif (c'est-à-dire le matériau piézoélectrique ou magnéto-strictif ou électro-strictif de l'antenne) de pièces mécaniques encombrantes, comme une masse sismique à l'arrière, un pavillon et un boîtier d'étanchéité. De plus, le fonctionnement en immersion de ces transducteurs implique de prévoir un dispositif de compensation de pression hydrostatique sous peine de dégrader fortement leur performance en immersion. Cette architecture d'antenne est inadaptée pour la conception d'objet remorqué de faible masse et implique un surdimensionnement des autres éléments du système.

En terme de compacité et de poids, d'autres architectures sont favorables, comme les antennes constituées d'un réseau vertical de transducteurs compacts de type flextenseurs. Néanmoins, ce type d'antenne ne permet pas d'obtenir une largeur de bande de fréquence nécessaire pour les SONAR large-bande récents, car leurs transducteurs sont mono-résonnants et fonctionnent sur un mode mécanique de flexion qui est très surtendu par nature. Les basses fréquences sont donc atteintes grâce à l'utilisation de flexion mécanique. Cette antenne est suffisamment compacte pour réduire l'encombrement et la masse du système, mais elle présente l'inconvénient de la minimisation du volume de matériau actif qui peut nuire à la puissance acoustique délivrable et donc au niveau sonore. La largeur de bande de ces antennes reste très inférieure à l'octave, une octave étant un intervalle de fréquence de la forme [f ; 2f].

Des antennes constituées d'un réseau vertical de transducteur de type « cylindre fendu » (ou « slotted cylinder » en anglais) sont également utilisées pour réaliser une antenne compacte et de masse faible. Ce type de transducteur est également basé sur un système de flexion mécanique et a donc intrinsèquement une largeur de bande de fréquence équivalente à celle des transducteurs flextenseurs. Les brevets US 9001623 en propose une intégration en corps remorqué et le brevet US 8717849 en propose une variante. Cette architecture permet de réaliser une antenne compacte et de faible poids, mais reste limitée en termes de bande de fréquence et de volume de matériau actif. Pour surmonter cela, l'antenne est étendue en longueur, mais l'énergie acoustique est alors focalisée dans un volume de fluide réduit, ce qui peut diminuer les performances de détection du sonar. L'extension de l'antenne en longueur entraîne également une pénalisation en termes de navigation du corps remorqué, surtout à vitesse élevée. De plus, son intégration sur le corps remorqué est complexe et augmente la masse du corps remorqué et par la suite, augmente la complexité d'utilisation opérationnelle.

Il est également possible d'utiliser des antennes constituées d'un réseau vertical de transducteurs compacts et large bande de type FFR (« Free-Flooded Ring ») pour augmenter la largeur de la bande de fréquence d'émission. Ce type d'antenne peut être présent sur des SONAR remorqués de bâtiments de surface. Le brevet FR 2776161 en donne un exemple. Le fonctionnement de ces transducteurs est basé sur le couplage de deux modes de résonance qui permet d'obtenir des largeurs de bande de l'ordre de l'octave. De plus, le ratio de matériau actif est très important par rapport à la masse totale, et donc il est possible de réaliser des émissions de forte puissance, ce qui est favorable au niveau sonore. Néanmoins, ces antennes ne permettent pas de couvrir plusieurs octaves.

Il est également possible d'utiliser des antennes constituées d'un réseau vertical de transducteurs divisés en groupes d'au moins deux transducteurs pour optimiser la largeur de bande d'émission et le niveau sonore (FR 3026569). Néanmoins, comme précédemment, il n'est pas possible de couvrir plusieurs octaves.

Afin d'augmenter la largeur de bande utile, il est possible d'associer plusieurs transducteurs FFR de différentes tailles (WO 2015/019116), mais cela entraîne une augmentation de la masse et donc du besoin en puissance, ce qui complexifie le système. Par rapport à l'antenne du brevet FR 2776161, la masse et le besoin en puissance sont 2,5 à 3 fois plus important. De plus, cette solution est limitée au niveau acoustique car il y a des interactions acoustiques entre les différents transducteurs et on constate un effet de masquage acoustique des transducteurs de petite taille par les transducteurs plus grands.

La demande de brevet US 2016/193629 A1 divulgue une antenne d'émission acoustique comprenant plusieurs ensembles de transducteurs qui comprennent chacun deux modes de résonnance.

L'invention vise à surmonter les inconvénients et limitations précités de l'art antérieur. Plus précisément, elle vise à proposer une antenne acoustique présentant une bande de fréquence large sans altération du niveau sonore, tout en restant dans un dimensionnement similaire à l'art antérieur en termes de masse, encombrement et puissance.

Un objet de l'invention est donc une antenne acoustique destinée à équiper un sonar, l'antenne étant centrée d'autour d'un premier axe longitudinal et comprenant au moins un premier ensemble d'au moins deux transducteurs et un second ensemble d'au moins deux transducteurs empilés selon ledit axe longitudinal, chaque transducteur présentant au moins un mode radial ayant une fréquence de résonance, dite fréquence radiale, ainsi qu'un mode de cavité ayant une fréquence de résonance, dite fréquence de cavité, caractérisée en ce que les transducteurs du premier ensemble sont configurés pour émettre des ondes sonores dans une première bande de fréquence continue s'étendant au moins entre les fréquences de cavité et les fréquences radiales des transducteurs du premier ensemble et les transducteurs du second ensemble sont configurés pour émettre des ondes sonores dans une seconde bande de fréquence continue s'étendant au moins entre les fréquences de cavité et les fréquences radiales des transducteurs du second ensemble, en ce que la fréquence de cavité d'un transducteur du second ensemble est sensiblement égale à la fréquence radiale d'un transducteur du premier ensemble plus ou moins (fr1-fc1)/10, fr1 étant la fréquence radiale du transducteur du premier ensemble et fc1 étant la fréquence de cavité du transducteur du premier ensemble.

Selon des modes de réalisation de l'invention :
- les transducteurs du second ensemble sont divisés en sous-groupes, chaque sous-groupe comprenant au moins deux transducteurs du second ensemble, l'espacement entre chaque sous-groupe étant supérieur ou égal à l'espacement entre deux transducteurs d'un même sous-groupe, et chaque sous-groupe présentant au moins un mode de cavité ayant une fréquence de résonance, dite fréquence de cavité de groupe ;
- le second ensemble comprend sept transducteurs divisés en trois sous-groupes, le premier sous-groupe comprenant deux transducteurs, le second groupe comprenant trois transducteurs, le troisième sous-groupe comprenant deux transducteurs, et le second sous-groupe étant placé entre le premier et le troisième sous-groupe.
- la fréquence de cavité de groupe d'au moins un sous-groupe est égale à la fréquence radiale des transducteurs du premier ensemble plus ou moins (fr1-fc1)/10 et la fréquence de cavité de groupe d'au moins un autre sous-groupe est égale à la fréquence de cavité des transducteurs du premier ensemble plus ou moins (fr1-fc1)/10, fr1 étant la fréquence radiale du transducteur du premier ensemble et fc1 étant la fréquence de cavité du transducteur du premier ensemble ;
- l'antenne comprend des éléments passifs empilés selon le premier axe longitudinal, entourant les transducteurs du second ensemble et présentant au moins un mode radial ayant une fréquence de résonance, dite fréquence radiale, égale à une fréquence radiale des transducteurs du second ensemble plus ou moins 0,1 x fr2, avantageusement égale à une fréquence radiale des transducteurs du second ensemble plus ou moins 0,05 x fr2, avec fr2 la fréquence radiale des transducteurs du second ensemble et présentant également au moins un mode de cavité ayant une fréquence de résonance, dite fréquence de cavité, comprise dans la première bande de fréquence ;
- les éléments passifs sont réalisés dans un matériau tel que le rapport E/p de ce matériau est plus élevé que celui du matériau composant les transducteurs du second ensemble, E étant le module d'Young et ρ la masse volumique des matériaux ;
- les éléments passifs sont des cylindres ayant un diamètre supérieur à celui des transducteurs du second ensemble ;
- les transducteurs sont des transducteurs FFR (« Free-Flooded Ring ») réalisés en céramique piézoélectrique ou en céramique magnétostrictive ou en céramiques électrostrictive ;
- les transducteurs du premier ensemble et du second ensemble sont à section circulaire, trapézoïdale ou polygonale ;
- l'antenne comprend au moins un troisième ensemble d'au moins deux transducteurs empilés selon K axes longitudinaux parallèles au premier axe longitudinal, K étant supérieur à 1, les transducteurs du troisième ensemble présentant au moins un mode radial ayant une fréquence de résonance, dite fréquence radiale, ainsi qu'un mode de cavité ayant une fréquence de résonance, dite fréquence de cavité égale à la fréquence radiale des transducteurs du second ensemble plus ou moins (fr2-fc2)/10, fr2 étant la fréquence radiale des transducteurs du second ensemble et fc2 la fréquence de cavité des transducteurs du second ensemble, les transducteurs du troisième ensemble étant configurés pour émettre des ondes sonores dans une troisième bande de fréquence continue s'étendant au moins entre leur fréquence de cavité et leur fréquence radiale, la troisième bande de fréquence présentant au moins une fréquence supérieure aux fréquences des première et seconde bandes de fréquence, et la réunion des première, seconde et troisième bandes de fréquence formant une bande de fréquence continue ;
- les K axes longitudinaux sont confondus avec le premier axe longitudinal ;
- l'antenne comprend au moins un premier déphaseur agencé de manière à introduire un premier déphasage entre un signal d'excitation des transducteurs du premier ensemble et un signal d'excitation d'au moins un sous-groupe de transducteurs du second ensemble ;
- l'antenne comprend également au moins un second déphaseur agencé de manière à introduire un second déphasage entre des signaux d'excitation de sous-groupes différents de transducteurs du second ensemble ; et
- l'antenne comprend N+1 groupements de transducteurs de même type et N déphaseurs agencés de manière à introduire un déphasage entre un signal d'excitation des transducteurs du premier groupement et un signal d'excitation d'un autre groupement, N étant un entier supérieur à 1.

Un autre objet de l'invention est un procédé d'étalonnage d'une antenne acoustique selon l'invention, caractérisé en ce qu'il comprend les étapes suivantes :
a. Exciter un premier groupement de transducteurs de même type et mettre les autres transducteurs en court-circuit ;
b. Mesurer en champ lointain la phase des ondes de pression générées par les transducteurs du premier groupement ;
c. Exciter un second groupement de transducteurs de même type et mettre les autres transducteurs en court-circuit ;
d. Mesurer en champ lointain la phase des ondes de pression générées par les transducteurs du second groupement ;
e. Calculer la différence de phase entre la phase obtenue à l'étape b et la phase obtenue à l'étape d ;
f. Régler un déphaseur pour qu'il introduise un déphasage égal à la différence calculée à l'étape e au signal d'excitation envoyé aux transducteurs du second groupement.

D'autres caractéristiques, détails et avantages de l'invention ressortiront à la lecture de la description faite en référence aux figures annexées données à titre d'exemple et qui représentent, respectivement :
- La figure 1, une antenne acoustique selon un premier mode de réalisation ;
- La figure 2, une antenne acoustique selon un second mode de réalisation ;
- Les figures 3a, 3b et 3c, une antenne acoustique selon, respectivement, un troisième, un quatrième et un cinquième mode de réalisation ;
- La figure 4, une antenne acoustique selon un sixième mode de réalisation ;
- La figure 5, un procédé d'étalonnage selon un mode de réalisation de l'invention ; et
- La figure 6a, des résultats de simulations avec une antenne acoustique selon un mode de réalisation de l'invention présenté en figure 6b.

Pour toute la description, le terme « cylindre » est utilisé au sens général et désigne une surface réglée dont les génératrices sont parallèles, c'est-à-dire une surface dans l'espace constituée de droites parallèles. Dans les modes de réalisation illustrés par les figures, les transducteurs et éléments passifs présentent une forme annulaire, c'est-à-dire de cylindre de révolution.

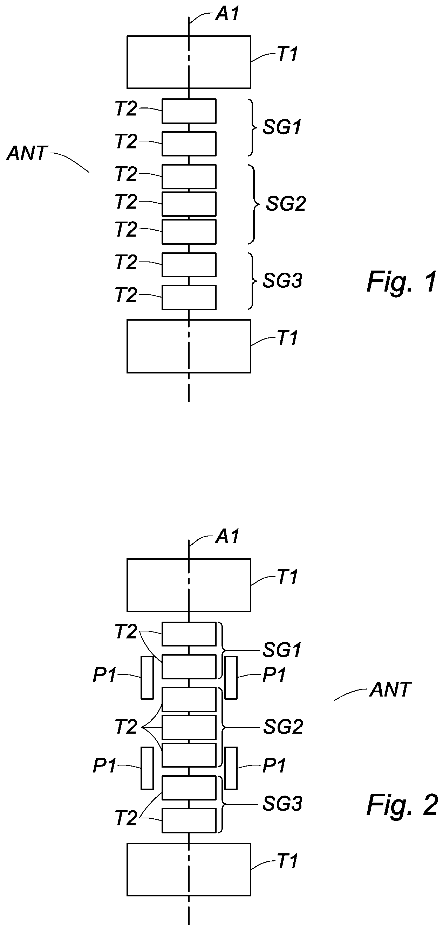

La figure 1 présente une antenne acoustique ANT selon un premier mode de réalisation. L'antenne ANT est centrée autour d'un premier axe longitudinal A1 et comprend un premier ensemble d'au moins deux transducteurs cylindriques creux T1 et un second ensemble d'au moins deux transducteurs cylindriques creux T2. Dans ce premier mode de réalisation, le premier ensemble comprend deux transducteurs T1 et le second ensemble sept transducteurs T2. Les transducteurs cylindriques T1 et T2 sont formés autour du même axe longitudinal A1. Les transducteurs T2 sont placés entre les transducteurs T1 sans qu'il y ait de recouvrement physique entre les transducteurs T1 et T2. Cela permet d'éviter les interactions acoustiques néfastes, comme le masquage des transducteurs T2 par les transducteurs T1. Chaque transducteur (T1, T2) présente au moins un mode radial ayant une fréquence de résonance, dite fréquence radiale et au moins un mode de cavité ayant une fréquence de résonance, dite fréquence de cavité. Les transducteurs T1 du premier ensemble sont configurés pour émettre des ondes sonores dans une première bande de fréquence s'étendant au moins entre les fréquences de cavité et les fréquences radiales des transducteurs T1, et les transducteurs T2 du second ensemble sont configurés pour émettre des ondes sonores dans une seconde bande de fréquence s'étendant au moins entre les fréquences de cavité et les fréquences radiales des transducteurs T2. Les transducteurs T1 et T2 présentent des dimensionnements physiques différents, en particulier les transducteurs T2 présentent des dimensions physiques plus faibles que celles des transducteurs T1, de manière à ce que la fréquence de cavité d'un transducteur T2 du second ensemble, fc2, soit sensiblement égale à la fréquence radiale d'un transducteur T1 du premier ensemble, fr1, avec une tolérance non supérieure à (fr1-fc1)/10, c'est-à-dire que fc2 = fr1 ± (fr1-fc1)/10 avec fc1 la fréquence de cavité d'un transducteur T1. Cela permet d'obtenir une bande de fréquence d'émission continue comprenant les fréquences des première et seconde bandes de fréquence.

Les transducteurs T2 du second ensemble peuvent être divisés en sous-groupes comprenant au moins deux transducteurs. Dans ce premier mode de réalisation, les transducteurs T2 sont divisés en trois sous-groupes (SG1, SG2, SG3). Le premier sous-groupe SG1 comprend deux transducteurs T2, le second sous-groupe SG2 comprend trois transducteurs T2 et le troisième sous-groupe SG3 comprend deux transducteurs T2. Le sous-groupe SG2 est placé entre les sous-groupes SG1 et SG3. L'espacement entre chaque sous-groupe, c'est-à-dire entre les sous-groupes SG1 et SG2 et les sous-groupes SG2 et SG3 pour ce premier mode de réalisation, est supérieur ou égal à l'espacement entre les transducteurs T2 d'un même sous-groupe. Cela permet de pouvoir réaliser plusieurs fonctions avec les transducteurs T2.

Chaque sous-groupe (SG1, SG2, SG3) présente au moins un mode de cavité ayant une fréquence de résonance, dite fréquence de cavité de groupe. En effet, lorsque deux transducteurs annulaires identiques sont agencés les uns au-dessus des autres à une distance faible par rapport à la longueur d'onde acoustique de leurs modes de cavités, ces modes interagissent et leur fréquence diminue (la fréquence du mode radial n'est pas affectée). Ainsi, comme, les transducteurs T2 présentent des dimensions physiques équivalentes, ce sont les espacements entre les transducteurs T2 d'un même sous-groupe qui permettent de modifier la fréquence de cavité de groupe d'un sous-groupe.

Au moins un des sous-groupes présente une fréquence de cavité de groupe sensiblement égale à la fréquence radiale des transducteurs T1 du premier ensemble avec une tolérance non supérieure à (fr1-fc1)/10, c'est-à-dire fcg = fr1 ± (fr1-fc1)/10, avec fcg la fréquence de cavité de groupe, fr1 la fréquence radiale des transducteurs T1 et fc1 la fréquence de de cavité des transducteurs T1. Au moins un autre des sous-groupes présente une fréquence de cavité de groupe sensiblement égale à la fréquence de cavité des transducteurs T1 du premier ensemble, c'est-à-dire qu'une fréquence de cavité de groupe est égale à la fréquence de cavité des transducteurs T1 plus ou moins (fr1-fc1)/10. Par exemple, dans ce premier mode de réalisation, ce sont les transducteurs T2 du premier sous-groupe SG1 et du troisième sous-groupe SG3 qui présentent une fréquence de cavité de groupe sensiblement égale à la fréquence radiale des transducteurs T1 du premier ensemble ; et ce sont les transducteurs T2 du second sous-groupe SG2 qui présentent une fréquence de cavité de groupe sensiblement égale à la fréquence de cavité des transducteurs T1 du premier ensemble. Dans ce mode de réalisation, l'espacement entre les transducteurs T2 au sein du second sous-groupe SG2 est donc plus petit que l'espacement entre les transducteurs T2 au sein des sous-groupes SG1 et SG3. La fréquence radiale des transducteurs T2 n'est pas affectée par l'espacement des transducteurs T2 au sein d'un sous-groupe. L'utilisation d'un espacement axial variable entre les transducteurs pour ajuster la fréquence de leur mode de volume est connue du document précité FR 3026569.

Le sous-groupe SG2 permet d'augmenter le niveau sonore des transducteurs T1 au voisinage de la fréquence de cavité des transducteurs T1, c'est-à-dire renforcer l'émission dans les fréquences les plus basses de la première bande de fréquence, tandis que les transducteurs T2 des sous-groupes SG1 et SG3, en ayant une même fréquence de cavité sensiblement égale à la fréquence radiale des transducteurs T1, permettent de renforcer l'émission dans la seconde bande de fréquence.

La figure 2 présente une antenne acoustique ANT selon un second mode de réalisation de l'invention. L'antenne acoustique ANT est centrée autour d'un axe longitudinal A1 et comprend deux ensembles de transducteurs (T1, T2) empilés selon l'axe longitudinal A1. Les transducteurs T2 sont placés entre les transducteurs T1 sans qu'il y ait de recouvrement physique entre les transducteurs T1 et T2 et sont divisés en trois sous-groupes SG1, SG2 et SG3 comme indiqué dans la figure 1. La fréquence de cavité de groupe des sous-groupes SG1 et SG3 est sensiblement égale à la fréquence radiale des transducteurs T1 et la fréquence de cavité de groupe du sous-groupe SG2 est sensiblement égale à la fréquence de cavité des transducteurs T1. Afin de renforcer le niveau sonore dans la bande de fréquence de cavité des transducteurs T1, c'est-à-dire au niveau de la borne inférieure de la première bande de fréquence, des éléments passifs P1 sont ajoutés à l'antenne ANT. Ces éléments passifs P1 sont empilés selon l'axe longitudinal A1, ils entourent les transducteurs T2 du second ensemble et sont placés entre les transducteurs T1 du premier ensemble. Ils présentent au moins un mode radial ayant une fréquence de résonance, dite fréquence radiale et au moins un mode de cavité ayant une fréquence de résonance, dite fréquence de cavité. Les éléments passifs P1 sont des cylindres, et plus particulièrement des anneaux.

Afin de ne pas perturber le mode radial des transducteurs T2, les éléments passifs P1 sont réalisés dans un matériau tel que le rapport *E*/*ρ* de ce matériau est plus élevé que celui du matériau composant les transducteurs T2 du second ensemble, E étant le module d'Young des matériaux et *ρ* leur masse volumique. Cela permet également d'obtenir un élément passif P1 de diamètre supérieur à celui des transducteurs T2 tout en ayant un mode radial résonant à la même fréquence, c'est-à-dire que la fréquence radiale des éléments passifs P1 est sensiblement égale à la fréquence radiale des transducteurs T2. La fréquence radiale des éléments P1 est égale à la fréquence radiale des transducteurs T2 plus ou moins 10% de la fréquence radiale des transducteurs T2, c'est-à-dire frp1 = fr2 ± 0,1 x fr2, avec frp1 la fréquence radiale des éléments passifs P1 et fr2 la fréquence radiale des transducteurs T2. Préférentiellement, frp1 = fr2 ± 0,05 x fr2.

De plus, pour éviter que l'émission des éléments passifs P1 ne masque l'émission des transducteurs T2, la fréquence radiale des éléments passifs P1 est sensiblement égale à la fréquence radiale des transducteurs T2 du second ensemble SG2 et la fréquence de cavité des éléments passifs P1 est comprise dans la première bande de fréquence.

L'excitation des éléments passifs P1 est issue du champ acoustique généré par les transducteurs T1 et les transducteurs T2 centraux, c'est-à-dire les transducteurs T2 du sous-groupe SG2 dans ce mode de réalisation.

Selon un autre mode de réalisation, la fréquence de cavité des éléments passifs P1 est sensiblement égale à la fréquence de cavité des transducteurs T1 du premier ensemble. Cela signifie que la fréquence de cavité des éléments passifs P1 est égale à la fréquence de cavité des transducteurs T1 plus ou moins (lcp1+lc1)/2, avec Icp1 la largeur à mi-hauteur du mode de cavité des éléments passifs P1 et lc1 la largeur à mi-hauteur du mode de cavité des transducteurs T1. Cela permet de renforcer plus efficacement le niveau sonore dans la première bande de fréquence.

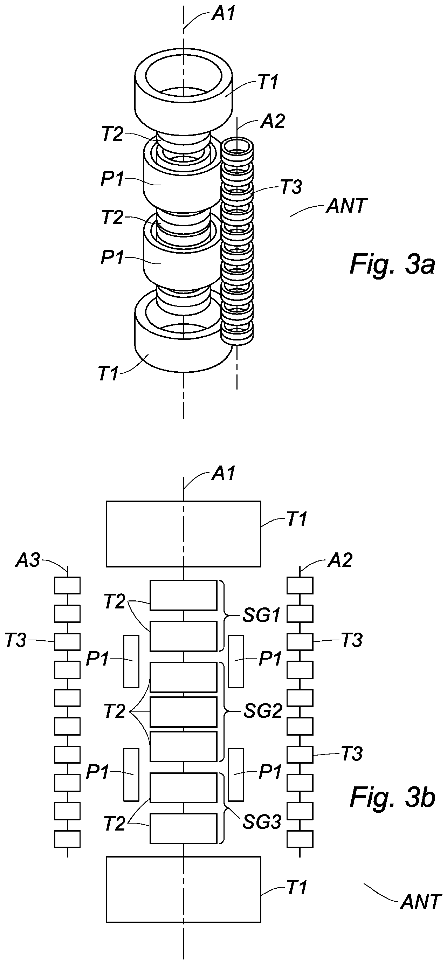

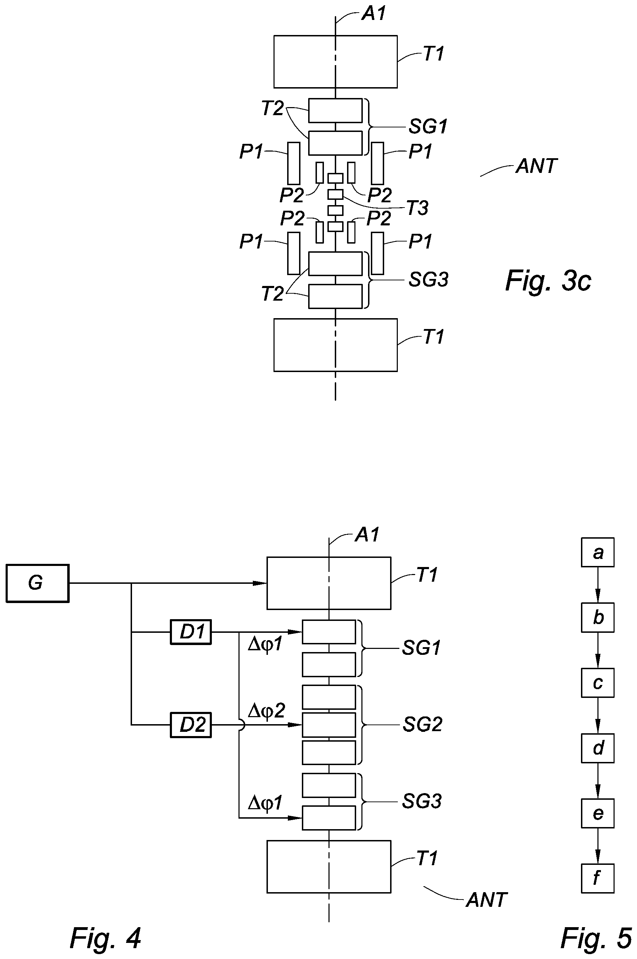

Les figures 3a, 3b et 3c présentent, respectivement, une antenne acoustique ANT selon un troisième, quatrième et cinquième mode de réalisation. Dans ces trois modes de réalisation, l'antenne acoustique ANT est centrée autour d'un premier axe longitudinal A1 et comprend trois ensembles de transducteurs T1, T2 et T3. Les transducteurs T1 et T2 sont empilés selon le premier axe longitudinal A1 et les transducteurs T3 sont empilés selon un second axe longitudinal A2 parallèle à l'axe A1. Les éléments passifs P1, les transducteurs T2 et T1 sont disposés et dimensionnés de la même manière que dans la figure 2. Plus particulièrement, la fréquence de cavité d'un transducteur T2 est sensiblement égale à la fréquence radiale des transducteurs T1 du premier ensemble, et les transducteurs T2 sont divisés en trois sous-groupes SG1, SG2 et SG3. La fréquence de cavité de groupe des sous-groupes SG1 et SG3 est sensiblement égale à la fréquence radiale des transducteurs T1 du premier ensemble et la fréquence de cavité de groupe du sous-groupe SG2 est sensiblement égale à la fréquence de cavité des transducteurs T1. De plus, la fréquence radiale des éléments passifs P1 est égale à la fréquence radiale des transducteurs T2 plus ou moins 0,1 x fr2, préférentiellement plus ou moins 0,05 x fr2 avec fr2 la fréquence radiale des transducteurs T2, et la fréquence de cavité des éléments passifs P1 est comprise dans la première bande de fréquence.

Les transducteurs T3 du troisième ensemble sont dimensionnés de manière à émettre des ondes sonores dans une troisième bande de fréquence continue différente des première et seconde bandes de fréquence. Les transducteurs T3 présentent au moins un mode radial ayant une fréquence de résonance, dite fréquence radiale et au moins un mode de cavité ayant une fréquence de résonance, dite fréquence de cavité. La troisième bande de fréquence s'étend au moins entre les fréquences de cavité et les fréquences radiales des transducteurs T3 du troisième ensemble. De plus, la fréquence de cavité des transducteurs T3 du troisième ensemble est sensiblement égale à la fréquence radiale des transducteurs T2 du second ensemble. La fréquence de cavité des transducteurs T3 est donc égale à la fréquence radiale des transducteurs T2 plus ou moins (fr2 - fc2)/10, avec fr2 la fréquence radiale des transducteurs T2 et fc2 la fréquence de cavité des transducteurs T2. La réunion des première, seconde et troisième bandes de fréquence permet donc d'obtenir une bande de fréquence continue couvrant trois octaves. L'obtention de cette troisième bande de fréquence est réalisée grâce au dimensionnement des transducteurs T3 du troisième ensemble, qui présentent des dimensions physiques plus faibles que celles des transducteurs T1 et T2.

Dans le mode de réalisation présenté en figure 3a, l'axe longitudinal A2 est différent de l'axe A1, les transducteurs T3 sont donc placés à côté de la structure comprenant les transducteurs T1 et T2. Ce mode de réalisation est possible, car les transducteurs T3, en étant plus petits que les transducteurs T1 et T2, masqueront peu les autres transducteurs.

Dans le mode de réalisation présenté en figure 3b, l'antenne ANT comprend plusieurs transducteurs T3 empilés selon deux axes longitudinaux A2 et A3 parallèles à l'axe A1 et distincts de l'axe A1. Cela permet d'obtenir une antenne plus compacte selon l'axe longitudinal A1, et également de s'affranchir des effets de masquage des transducteurs T3 par les transducteurs T1 et T2 pour pouvoir faire des émissions acoustiques omnidirectionnelles, si les transducteurs T3 empilés selon les axes A2 et A3 fonctionnent en alternance avec les autres transducteurs ou pour pouvoir faire des émissions acoustiques directionnelles orientables, si tous les transducteurs émettent simultanément.

Plus généralement, l'antenne ANT peut comprendre plusieurs transducteurs T3 empilés selon K axes longitudinaux et parallèles à l'axe A1, avec K entier supérieur à 1. Encore plus généralement, l'antenne ANT peut comprendre plusieurs ensembles de transducteurs T2, T3, ..., TN comprenant, chacun, au moins un transducteur, les transducteurs de chaque ensemble étant empilés selon K axes longitudinaux et parallèles à l'axe A1 sur lequel sont empilés les transducteurs T1 et N étant un entier supérieur à 2.

Dans le mode de réalisation présenté en figure 3c, l'axe longitudinal A2 est confondu avec l'axe A1. Les transducteurs T3 sont placés entre les transducteurs T2, en particulier entre les sous-groupes SG1 et SG3, le sous-groupe SG2 étant remplacé par les transducteurs T3. L'espacement entre le troisième ensemble de transducteurs T3 est défini de manière analogue à celui des transducteurs T2 vis-à-vis des transducteurs T1 comme indiqué précédemment. Par exemple, sur la figure, l'espacement entre les transducteurs T3 et les transducteurs des sous-groupes SG1 ou SG3 est supérieur à l'espacement entre les transducteurs T3 et également supérieur à l'espacement entre les transducteurs T2 d'un même sous-groupe.

Plus généralement, lorsque ces K axes sont positionnés de façon à ce que l'encombrement radial de l'ensemble des transducteurs T3 soit de l'ordre de grandeur du diamètre externe des transducteurs T1 plus ou moins 10 %, on obtient une antenne compacte susceptible d'être installée sur un corps remorqué. Cela permet de pouvoir réaliser aussi bien des émissions acoustiques omnidirectionnelles ou directionnelles orientables avec les transducteurs T1, T2 et T3 actifs en même temps. Dans un autre mode de réalisation, il est possible d'avoir les K axes longitudinaux confondus avec l'axe A1.Cette configuration peut, par exemple, être utilisée pour une installation fixe.

De plus, afin de renforcer le niveau sonore des transducteurs T2, des éléments passifs P2 peuvent également être présents. Ces éléments passifs P2 sont empilés selon l'axe longitudinal A1 et entourent les transducteurs T3 du troisième ensemble. Les éléments passifs P1 peuvent entourer les éléments passifs P2, comme ce qui est représenté sur la figure 3c. Les éléments passifs P2 présentent au moins un mode radial ayant une fréquence de résonance, dite fréquence radiale, et au moins un mode de cavité ayant une fréquence de résonance, dite fréquence de cavité. La fréquence radiale des éléments passifs P2 est sensiblement égale à la fréquence radiale des transducteurs T3 du troisième ensemble et la fréquence de cavité des éléments passifs P2 est comprise dans la seconde bande de fréquence. De la même manière que précédemment, cela signifie que la fréquence radiale des éléments passifs P2 est égale à la fréquence radiale des transducteurs T3 plus ou moins 0,1 x fr3 et préférentiellement plus ou moins 0,05 x fr3 avec fr3 la fréquence radiale des transducteurs T3. De plus, de la même manière que pour les éléments passifs P1, pour ne pas perturber le mode radial des transducteurs T3 autour desquels ils sont positionnés, les éléments passifs P2 sont réalisés dans un matériau tel que le rapport *E*/*ρ* de ce matériau est plus élevé que celui du matériau composant les transducteurs T3, E étant le module d'Young et *ρ* la masse volumique des matériaux.

Selon un autre mode de réalisation, comme pour les transducteurs T1 et T2, il est également possible de diviser les transducteurs T3 en sous-groupes pour renforcer le niveau sonore dans la partie inférieure de la troisième bande de fréquence.

Plus généralement, il est possible de réaliser une antenne acoustique en structure récursive. Le dimensionnement des transducteurs est réalisé de manière à ce que le mode basse fréquence, c'est-à-dire le mode de cavité, d'un transducteur d'un ensemble i+1 soit superposé au mode haute fréquence, c'est-à-dire au mode radial, d'un transducteur d'un ensemble i.

Si les transducteurs sont monomodes, on peut utiliser le même principe en faisant coïncider le bas de la bande de fréquence d'émission du transducteur d'un ensemble i+1 avec le haut de la bande de fréquence d'émission du transducteur d'un ensemble i.

Si les transducteurs sont multimodes, on peut utiliser le même principe que pour les transducteurs bi-modes, c'est-à-dire les transducteurs présentant un mode de cavité et un mode radial, et faire coïncider la fréquence de résonance la plus haute des transducteurs de l'ensemble i avec la fréquence de résonance la plus basse des transducteurs de l'ensemble i+1.

De plus, les transducteurs sont disposés de façon à ce que ceux fonctionnant en plus haute fréquence soient insérés entre au moins deux transducteurs fonctionnant en plus basse fréquence.

Plus généralement, le nombre d'éléments passifs P1 et P2 est égal à N, avec N entier naturel supérieur à 1. Chaque ensemble ou sous-groupe peut comprendre un nombre M, entier supérieur à 1, de transducteurs. L'antenne acoustique peut donc, par exemple, comprendre trois transducteurs T1, chacun entourant, par exemple, un ensemble de transducteurs T2 et/ou T3. De plus, les transducteurs T1 du premier ensemble pourraient également être placés entre deux transducteurs d'un autre ensemble de transducteurs présentant une bande de fréquence d'émission plus basse que celle des transducteurs T1. L'antenne peut également comprendre plusieurs transducteurs T1 divisés en sous-groupes d'au moins deux transducteurs.

La figure 4 présente une antenne acoustique ANT selon un sixième mode de réalisation. Les dimensions physiques de l'antenne ANT et l'étendue de la bande de fréquence couverte par tous les transducteurs (T1, T2) ou (T1, T2, T3) compris dans l'antenne ANT peuvent faire apparaître des interférences destructives pour certaines fréquences de la bande de fréquence, se traduisant par des « trous » dans la bande de fréquence de l'antenne. Cela peut être évité en déphasant de manière opportune les signaux d'excitation des transducteurs formant ces différentes « sous-antennes », signaux qui sont avantageusement issus d'un générateur G unique. Dans le mode de réalisation de la figure 4, les transducteurs T1 du premier ensemble servent de référence et sont directement reliés au générateur G ; les transducteurs T2 des sous-groupes SG1 et SG3 sont reliés au générateur G par l'intermédiaire d'un premier déphaseur D1 configuré de manière à appliquer une différence de phase Δϕ1 aux signaux d'excitation reçus par ces transducteurs ; les transducteurs T2 du sous-groupe SG2 sont reliés au générateur G par l'intermédiaire d'un second déphaseur D2 configuré de manière à appliquer une différence de phase Δϕ2 aux signaux d'excitation reçus par ces transducteurs.

Selon un autre mode de réalisation, l'antenne ANT ne comprend qu'un seul déphaseur configuré pour appliquer une différence de phase aux signaux d'excitation envoyés à tous les transducteurs T2 du second ensemble par rapport aux signaux d'excitation envoyés aux transducteurs T1 du premier ensemble.

De la même manière, l'antenne ANT peut comprendre un troisième déphaseur configuré pour appliquer une différence de phase aux signaux d'excitation envoyés aux transducteurs T3 du troisième ensemble par rapport aux signaux d'excitation envoyés aux transducteurs T2 du second ensemble.

Plus généralement, il est possible de prendre n'importe quel ensemble ou sous-groupes de transducteurs comme référence puis d'ajouter un déphaseur pour déphaser les autres transducteurs par rapport à l'ensemble ou sous-groupe de référence.

Selon un autre mode de réalisation, les déphaseurs sont réglables.

Selon un mode de réalisation de l'invention, les transducteurs (T1, T2, T3) sont des transducteurs « Free-Flooded Ring » (FFR). Plus particulièrement, ils sont réalisés en céramique piézoélectrique ou en céramique magnétostrictive ou en céramique électrostrictive. Les transducteurs peuvent également être réalisés avec des matériaux dérivés de mélanges pour céramiques piézoélectriques, comme des monocristaux ou des céramiques texturées, ou avec des matériaux basés sur des principes différents, comme l'électro-dynamisme.

Selon un autre mode de réalisation, les transducteurs (T1, T2, T3) sont à section circulaire, trapézoïdale ou polygonale. Le diamètre d'un transducteur est défini par la longueur la plus grande d'un segment inclus dans sa section.

Selon un autre mode de réalisation, on peut placer au moins deux antennes ANT réalisées selon l'invention l'une à côté de l'autre pour obtenir plus de puissance d'émission et une émission directionnelle, ce qui permet notamment d'augmenter le niveau sonore en émission directionnelle ou omnidirectionnelle.

La figure 5 présente un procédé d'étalonnage d'une antenne acoustique selon un mode de réalisation de l'invention. Dans la première étape a, on excite un premier groupement de transducteurs de même type et on met les autres transducteurs en court-circuit. Dans l'étape suivante b, on mesure la phase des ondes de pression en champ lointain générées par les transducteurs du premier groupement. A l'étape suivante c, on excite un second groupement de transducteurs de même type et les autres transducteurs sont mis en court-circuit. A l'étape d, on mesure la phase des ondes de pression en champ lointain générées par les transducteurs du second groupement. L'étape e consiste à calculer la différence de phase entre les mesures des étapes b et d. Enfin, dans l'étape f, on règle un déphaseur pour qu'il introduise un déphasage égal à la différence de phase calculée à l'étape e au signal d'excitation envoyé aux transducteurs du second groupement.

Par exemple, le premier groupement de transducteurs est le premier ensemble de transducteurs T1 et le second groupement est le second ensemble de transducteurs T2. On pourrait donc utiliser le déphaseur D1, présent dans la figure 4, pour introduire un déphasage égal à la différence de phase calculée avec ces deux groupements de transducteurs.

Dans un autre exemple, le premier groupement de transducteurs comprend les transducteurs T1 du premier ensemble et le second groupement de transducteurs comprend les transducteurs T2 du sous-groupe SG2. Le déphaseur D2, présent dans la figure 4, pourrait donc être utilisé pour introduire un déphasage égal à la différence de phase calculée avec ces deux groupements de transducteurs.

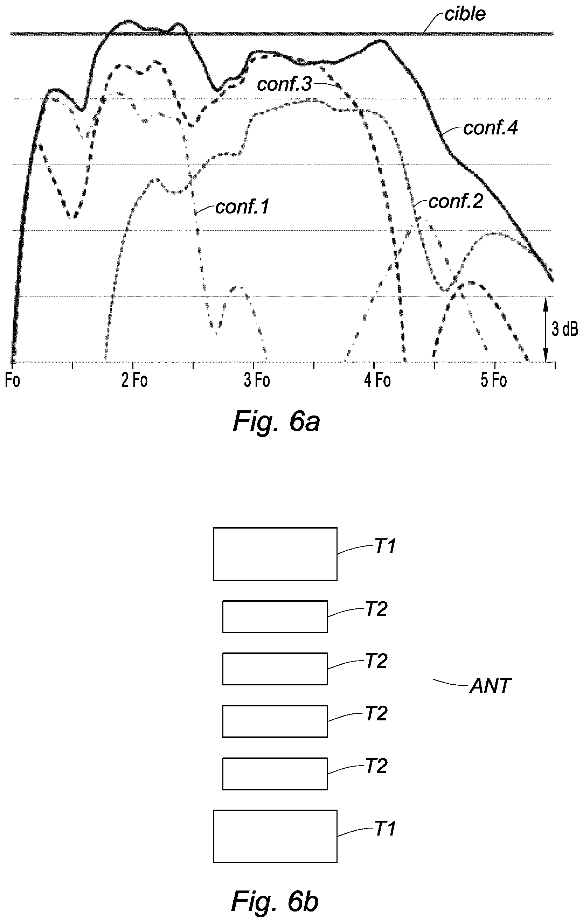

La figure 6a présente des résultats de simulations avec une antenne acoustique selon un mode de réalisation de l'invention, en particulier le niveau sonore d'émission en fonction de la fréquence. Dans ce mode de réalisation, présenté en figure 6b, l'antenne acoustique ANT comprend deux transducteurs T1 appartenant au premier ensemble et quatre transducteurs T2 appartenant au second ensemble. Les transducteurs T2 ne sont pas divisés en sous-groupes. Plusieurs configurations de l'antenne acoustique sont étudiées. Dans la première configuration, seuls les transducteurs T1 sont actifs et émettent des ondes sonores. Dans la seconde configuration, seuls les transducteurs T2 sont actifs et émettent des ondes sonores et dans la troisième configuration, les transducteurs T1 et T2 sont tous actifs et émettent des ondes sonores. Les configurations 1 à 3 sont réalisées sans l'utilisation de déphaseurs. Dans la configuration 4, les transducteurs T1 et T2 sont tous actifs, et des déphaseurs sont utilisés pour appliquer le procédé d'étalonnage décrit en figure 5.

La configuration 1 est représentée par la courbe grise en pointillé-point, la configuration 2 par la courbe grise en pointillé, la configuration 3 par la courbe noire en pointillé et la configuration 4 par la courbe noire pleine. Enfin, la courbe grise pleine représente le niveau sonore maximal désiré. On constate bien que si les transducteurs du premier ensemble et du second ensemble ne sont pas actifs en même temps, on ne peut pas obtenir une émission acoustique avec un niveau sonore suffisant (c'est-à-dire à -3 dB du niveau sonore désiré) sur une bande de fréquence continue de deux octaves.

Quand les deux ensembles de transducteurs sont activés en même temps (configuration 3), le niveau sonore en émission sur deux octaves est augmenté, mais il reste cependant insuffisant, car à certaines fréquences, il est inférieur de plus de 3 dB au niveau sonore désiré. Avec l'utilisation de déphaseurs selon le procédé d'étalonnage en configuration 4, il est possible d'obtenir une bande de fréquence d'émission continue d'au moins deux octaves avec un niveau sonore suffisant, car supérieur à -3 dB par rapport au niveau maximal désiré.

Bien que son utilisation soit prévue ici pour être incluse dans un corps remorqué de SONAR à immersion variable, une antenne acoustique selon l'invention peut toutefois être implantée sur tout porteur moyennant la mise en place d'une protection par un dôme. L'utilisation en poste fixe est aussi possible et ne nécessite alors aucune protection particulière.

## Revendications

1. Antenne acoustique (ANT) destinée à équiper un sonar, l'antenne étant centrée d'autour d'un premier axe longitudinal (A1) et comprenant au moins un premier ensemble d'au moins deux transducteurs (T1) et un second ensemble d'au moins deux transducteurs (T2) empilés selon ledit axe longitudinal, chaque transducteur présentant au moins un mode radial ayant une fréquence de résonance, dite fréquence radiale, ainsi qu'un mode de cavité ayant une fréquence de résonance, dite fréquence de cavité, les transducteurs du premier ensemble étant configurés pour émettre des ondes sonores dans une première bande de fréquence continue s'étendant au moins entre les fréquences de cavité et les fréquences radiales des transducteurs du premier ensemble et les transducteurs du second ensemble étant configurés pour émettre des ondes sonores dans une seconde bande de fréquence continue s'étendant au moins entre les fréquences de cavité et les fréquences radiales des transducteurs du second ensemble, la fréquence de cavité d'un transducteur du second ensemble étant sensiblement égale à la fréquence radiale d'un transducteur du premier ensemble plus ou moins (fr1-fc1)/10, fr1 étant la fréquence radiale du transducteur du premier ensemble et fc1 étant la fréquence de cavité du transducteur du premier ensemble, **caractérisée en ce que** les transducteurs du second ensemble sont placés entre les transducteurs du premier ensemble et **en ce qu'**aucun transducteur du premier ensemble n'est placé entre les transducteurs du second ensemble.

2. Antenne acoustique selon la revendication 1, dans laquelle les transducteurs du second ensemble sont divisés en sous-groupes, chaque sous-groupe comprenant au moins deux transducteurs du second ensemble, l'espacement entre chaque sous-groupe étant supérieur ou égal à l'espacement entre deux transducteurs d'un même sous-groupe, et chaque sous-groupe présentant au moins un mode de cavité ayant une fréquence de résonance, dite fréquence de cavité de groupe.

3. Antenne acoustique selon la revendication 2, dans laquelle le second ensemble comprend sept transducteurs divisés en trois sous-groupes, le premier sous-groupe (SG1) comprenant deux transducteurs, le second groupe (SG2) comprenant trois transducteurs, le troisième sous-groupe (SG3) comprenant deux transducteurs, et le second sous-groupe étant placé entre le premier et le troisième sous-groupe.

4. Antenne acoustique selon l'une des revendications 2 à 3 dans laquelle la fréquence de cavité de groupe d'au moins un sous-groupe est égale à la fréquence radiale des transducteurs du premier ensemble plus ou moins (fr1-fc1)/10 et la fréquence de cavité de groupe d'au moins un autre sous-groupe est égale à la fréquence de cavité des transducteurs du premier ensemble plus ou moins (fr1-fc1)/10, fr1 étant la fréquence radiale du transducteur du premier ensemble et fc1 étant la fréquence de cavité du transducteur du premier ensemble.

5. Antenne acoustique selon l'une des revendications précédentes, comprenant des éléments passifs (P1) empilés selon le premier axe longitudinal, entourant les transducteurs du second ensemble et présentant au moins un mode radial ayant une fréquence de résonance, dite fréquence radiale, égale à une fréquence radiale des transducteurs du second ensemble plus ou moins 0,1 x fr2, avantageusement égale à une fréquence radiale des transducteurs du second ensemble plus ou moins 0,05 x fr2, avec fr2 la fréquence radiale des transducteurs du second ensemble et présentant également au moins un mode de cavité ayant une fréquence de résonance, dite fréquence de cavité, comprise dans la première bande de fréquence.

6. Antenne acoustique selon la revendication 5 dans laquelle les éléments passifs sont réalisés dans un matériau tel que le rapport E/p de ce matériau est plus élevé que celui du matériau composant les transducteurs du second ensemble, E étant le module d'Young et ρ la masse volumique des matériaux.

7. Antenne acoustique selon la revendication 6 dans laquelle les éléments passifs sont des cylindres ayant un diamètre supérieur à celui des transducteurs du second ensemble.

8. Antenne acoustique selon l'une des revendications précédentes, dans laquelle les transducteurs sont des transducteurs FFR (« Free-Flooded Ring ») réalisés en céramique piézoélectrique ou en céramique magnétostrictive ou en céramiques électrostrictive.

9. Antenne acoustique selon l'une des revendications précédentes, dans laquelle les transducteurs du premier ensemble et du second ensemble sont à section circulaire, trapézoïdale ou polygonale.

10. Antenne acoustique selon l'une des revendications précédentes, comprenant au moins un troisième ensemble d'au moins deux transducteurs (T3) empilés selon K axes longitudinaux (A2, A3) parallèles au premier axe longitudinal (A1), K étant supérieur à 1, les transducteurs du troisième ensemble présentant au moins un mode radial ayant une fréquence de résonance, dite fréquence radiale, ainsi qu'un mode de cavité ayant une fréquence de résonance, dite fréquence de cavité égale à la fréquence radiale des transducteurs du second ensemble plus ou moins (fr2-fc2)/10, fr2 étant la fréquence radiale des transducteurs du second ensemble et fc2 la fréquence de cavité des transducteurs du second ensemble, les transducteurs du troisième ensemble étant configurés pour émettre des ondes sonores dans une troisième bande de fréquence continue s'étendant au moins entre leur fréquence de cavité et leur fréquence radiale, la troisième bande de fréquence présentant au moins une fréquence supérieure aux fréquences des première et seconde bandes de fréquence, et la réunion des première, seconde et troisième bandes de fréquence formant une bande de fréquence continue.

11. Antenne acoustique selon la revendication 10, dans laquelle les K axes longitudinaux sont confondus avec le premier axe longitudinal.

12. Antenne acoustique selon l'une des revendications précédentes, comprenant au moins un premier déphaseur (D1) agencé de manière à introduire un premier déphasage (Δϕ1) entre un signal d'excitation des transducteurs du premier ensemble et un signal d'excitation d'au moins un sous-groupe de transducteurs du second ensemble.

13. Antenne acoustique selon la revendication 12, comprenant également au moins un second déphaseur (D2) agencé de manière à introduire un second déphasage (Δϕ2) entre des signaux d'excitation de sous-groupes différents de transducteurs du second ensemble.

14. Antenne acoustique selon l'une des revendications précédentes, comprenant N+1 groupements de transducteurs de même type et N déphaseurs agencés de manière à introduire un déphasage entre un signal d'excitation des transducteurs du premier groupement et un signal d'excitation d'un autre groupement, N étant un entier supérieur à 1.

15. Procédé d'étalonnage d'une antenne acoustique selon l'une des revendications 12 à 14, **caractérisé en ce qu'**il comprend les étapes suivantes :
a. Exciter un premier groupement de transducteurs de même type et mettre les autres transducteurs en court-circuit ;
b. Mesurer en champ lointain la phase des ondes de pression générées par les transducteurs du premier groupement ;
c. Exciter un second groupement de transducteurs de même type et mettre les autres transducteurs en court-circuit ;
d. Mesurer en champ lointain la phase des ondes de pression générées par les transducteurs du second groupement ;
e. Calculer la différence de phase entre la phase obtenue à l'étape b et la phase obtenue à l'étape d ;
f. Régler un déphaseur pour qu'il introduise un déphasage égal à la différence calculée à l'étape e au signal d'excitation envoyé aux transducteurs du second groupement.

## Patentansprüche

1. Akustische Antenne (ANT), die dazu bestimmt ist, ein Sonar auszustatten, wobei die Antenne um eine erste Längsachse (A1) zentriert ist und mindestens eine erste Einheit aus mindestens zwei Wandlern (T1) und eine zweite Einheit aus mindestens zwei Wandlern (T2) umfasst, die entlang der Längsachse gestapelt sind, wobei jeder Wandler mindestens eine radiale Mode mit einer Resonanzfrequenz, die als radiale Frequenz bezeichnet wird, sowie eine Hohlraummode mit einer Resonanzfrequenz, die als Hohlraumfrequenz bezeichnet wird, aufweist, wobei die Wandler der ersten Einheit konfiguriert sind, um Schallwellen in einem ersten kontinuierlichen Frequenzband auszusenden, das sich mindestens zwischen den Hohlraumfrequenzen und den radialen Frequenzen der Wandler der ersten Einheit erstreckt, und die Wandler der zweiten Einheit konfiguriert sind, um Schallwellen in einem zweiten kontinuierlichen Frequenzband auszusenden, das sich mindestens zwischen den Hohlraumfrequenzen und den radialen Frequenzen der Wandler der zweiten Einheit erstreckt, wobei die Hohlraumfrequenz eines Wandlers der zweiten Einheit im Wesentlichen gleich der radialen Frequenz eines Wandlers der ersten Einheit plus oder minus (fr1-fc1)/10 ist, wobei fr1 die radiale Frequenz des Wandlers der ersten Einheit ist und fc1 die Hohlraumfrequenz des Wandlers der ersten Einheit ist, **dadurch gekennzeichnet, dass** die Wandler der zweiten Einheit zwischen den Wandlern der ersten Einheit angeordnet sind und dass kein Wandler der ersten Einheit zwischen den Wandlern der zweiten Einheit angeordnet ist.

2. Akustische Antenne nach Anspruch 1, wobei die Wandler der zweiten Einheit in Untergruppen unterteilt sind, wobei jede Untergruppe mindestens zwei Wandler der zweiten Einheit umfasst, der Abstand zwischen jeder Untergruppe größer oder gleich dem Abstand zwischen zwei Wandlern derselben Untergruppe ist, und jede Untergruppe mindestens eine Hohlraummode mit einer Resonanzfrequenz, die als Gruppenhohlraumfrequenz bezeichnet wird, aufweist.

3. Akustische Antenne nach Anspruch 2, wobei die zweite Einheit sieben Wandler umfasst, die in drei Untergruppen unterteilt sind, wobei die erste Untergruppe (SG1) zwei Wandler umfasst, die zweite Gruppe (SG2) drei Wandler umfasst, die dritte Untergruppe (SG3) zwei Wandler umfasst, und die zweite Untergruppe zwischen der ersten und der dritten Untergruppe angeordnet ist.

4. Akustische Antenne nach einem der Ansprüche 2 bis 3, wobei die Gruppenhohlraumfrequenz mindestens einer Untergruppe gleich der radialen Frequenz der Wandler der ersten Einheit plus oder minus (fr1-fc1)/10 ist und die Gruppenhohlraumfrequenz mindestens einer weiteren Untergruppe gleich der Hohlraumfrequenz der Wandler der ersten Einheit plus oder minus (fr1-fc1)/10 ist, wobei fr1 die radiale Frequenz des Wandlers der ersten Einheit ist und fc1 die Hohlraumfrequenz des Wandlers der ersten Einheit ist.

5. Akustische Antenne nach einem der vorhergehenden Ansprüche, die passive Elemente (P1) umfasst, die entlang der ersten Längsachse gestapelt sind, die Wandler der zweiten Einheit umgeben und mindestens eine radiale Mode mit einer Resonanzfrequenz, die als radiale Frequenz bezeichnet wird, aufweisen, die gleich einer radialen Frequenz der Wandler der zweiten Einheit plus oder minus 0,1 x fr2, vorteilhafterweise gleich einer radialen Frequenz der Wandler der zweiten Einheit plus oder minus 0,05 x fr2 ist, wobei fr2 die radiale Frequenz der Wandler der zweiten Einheit ist, und auch mindestens eine Hohlraummode mit einer Resonanzfrequenz, die als Hohlraumfrequenz bezeichnet wird, aufweist, die in dem ersten Frequenzband enthalten ist.

6. Akustische Antenne nach Anspruch 5, wobei die passiven Elemente aus einem solchen Material hergestellt sind, dass das Verhältnis E/p dieses Materials höher ist als das des Materials, aus dem die Wandler der zweiten Einheit bestehen, wobei E der Elastizitätsmodul und ρ die Dichte der Materialien ist.

7. Akustische Antenne nach Anspruch 6, wobei die passiven Elemente Zylinder mit einem Durchmesser sind, der größer ist als der der Wandler der zweiten Einheit.

8. Akustische Antenne nach einem der vorhergehenden Ansprüche, wobei die Wandler FFR-Wandler ("Free-Flooded Ring") sind, die aus piezoelektrischer Keramik oder magnetostriktiver Keramik oder elektrostriktiver Keramik hergestellt sind.

9. Akustische Antenne nach einem der vorhergehenden Ansprüche, wobei die Wandler der ersten Einheit und der zweiten Einheit einen kreisförmigen, trapezförmigen oder polygonalen Querschnitt haben.

10. Akustische Antenne nach einem der vorhergehenden Ansprüche, die mindestens eine dritte Einheit von mindestens zwei Wandlern (T3) umfasst, die entlang K Längsachsen (A2, A3) parallel zur ersten Längsachse (A1) gestapelt sind, wobei K größer als 1 ist, wobei die Wandler der dritten Einheit mindestens eine radiale Mode mit einer Resonanzfrequenz, die als radiale Frequenz bezeichnet wird, sowie eine Hohlraummode mit einer Resonanzfrequenz, die als Hohlraumfrequenz bezeichnet wird, aufweisen, die gleich der radialen Frequenz der Wandler der zweiten Einheit plus oder minus (fr2-fc2)/10 ist, wobei fr2 die radiale Frequenz der Wandler der zweiten Einheit ist und fc2 die Hohlraumfrequenz der Wandler der zweiten Einheit ist, wobei die Wandler der dritten Einheit konfiguriert sind, um Schallwellen in einem dritten kontinuierlichen Frequenzband auszusenden, das sich mindestens zwischen ihrer Hohlraumfrequenz und ihrer radialen Frequenz erstreckt, wobei das dritte Frequenzband mindestens eine Frequenz aufweist, die höher ist als die Frequenzen des ersten und des zweiten Frequenzbandes, und wobei das Zusammentreffen des ersten, des zweiten und des dritten Frequenzbandes ein kontinuierliches Frequenzband bildet.

11. Akustische Antenne nach Anspruch 10, wobei die K Längsachsen mit der ersten Längsachse zusammenfallen.

12. Akustische Antenne nach einem der vorhergehenden Ansprüche, die mindestens einen ersten Phasenschieber (D1) umfasst, der so angeordnet ist, dass er eine erste Phasenverschiebung (Δϕ1) zwischen einem Anregungssignal der Wandler der ersten Einheit und einem Anregungssignal mindestens einer Untergruppe von Wandlern der zweiten Einheit einführt.

13. Akustische Antenne nach Anspruch 12, die auch mindestens einen zweiten Phasenschieber (D2) umfasst, der so angeordnet ist, dass er eine zweite Phasenverschiebung (Δϕ2) zwischen Anregungssignalen von verschiedenen Untergruppen von Wandlern der zweiten Einheit einführt.

14. Akustische Antenne nach einem der vorhergehenden Ansprüche, die N+1 Gruppierungen von Wandlern desselben Typs und N Phasenschieber umfasst, die so angeordnet sind, dass sie eine Phasenverschiebung zwischen einem Anregungssignal der Wandler der ersten Gruppierung und einem Anregungssignal einer anderen Gruppierung einführen, wobei N eine ganze Zahl größer als 1 ist.

15. Verfahren zum Kalibrieren einer akustischen Antenne nach einem der Ansprüche 12 bis 14, **dadurch gekennzeichnet, dass** es die folgenden Schritte umfasst:
a. Anregen einer ersten Gruppierung von Wandlern desselben Typs und Kurzschließen der anderen Wandler;
b. Fernfeldmessen der Phase der Druckwellen, die von den Wandlern der ersten Gruppierung erzeugt werden;
c. Anregen einer zweiten Gruppierung von Wandlern desselben Typs und Kurzschließen der anderen Wandler;
d. Fernfeldmessen der Phase der Druckwellen, die von den Wandlern der zweiten Gruppierung erzeugt werden;
e. Berechnen der Phasendifferenz zwischen der in Schritt b erhaltenen Phase und der in Schritt d erhaltenen Phase;
f. Einstellen eines Phasenschiebers, so dass er eine Phasenverschiebung gleich der in Schritt e berechneten Differenz in das an die Wandler der zweiten Gruppierung gesendete Anregungssignal einführt.

## Claims

1. An acoustic antenna (ANT) intended to equip a sonar, the antenna being centred around a first longitudinal axis (A1) and comprising at least a first set of at least two transducers (T1) and a second set of at least two transducers (T2) stacked along said longitudinal axis, with each transducer having at least one radial mode having a resonant frequency, called radial frequency, as well as a cavity mode having a resonant frequency, called cavity frequency, the transducers of the first set being configured to transmit sound waves in a first continuous frequency band extending at least between the cavity frequencies and the radial frequencies of the transducers of the first set and the transducers of the second set being configured to transmit sound waves in a second continuous frequency band extending at least between the cavity frequencies and the radial frequencies of the transducers of the second set, with the cavity frequency of a transducer of the second set being substantially equal to the radial frequency of a transducer of the first set plus or minus (fr1-fc1)/10, with fr1 being the radial frequency of the transducer of the first set and fc1 being the cavity frequency of the transducer of the first set, **characterised in that** the transducers of the second set are placed between the transducers of the first set and **in that** no transducer of the first set is placed between the transducers of the second set.

2. The acoustic antenna according to claim 1, wherein the transducers of the second set are divided into sub-groups, with each sub-group comprising at least two transducers of the second set, the spacing between each sub-group being greater than or equal to the spacing between two transducers of the same sub-group, and each sub-group having at least one cavity mode having a resonant frequency, called group cavity frequency.

3. The acoustic antenna according to claim 2, wherein the second set comprises seven transducers divided into three sub-groups, with the first sub-group (SG1) comprising two transducers, the second group (SG2) comprising three transducers, the third sub-group (SG3) comprising two transducers, and the second sub-group being placed between the first and the third sub-group.

4. The acoustic antenna according to one of claims 2 to 3, wherein the group cavity frequency of at least one sub-group is equal to the radial frequency of the transducers of the first set plus or minus (fr1-fc1)/10 and the group cavity frequency of at least one other sub-group is equal to the cavity frequency of the transducers of the first set plus or minus (fr1-fc1)/10, with fr1 being the radial frequency of the transducer of the first set and fc1 being the cavity frequency of the transducer of the first set.

5. The acoustic antenna according to one of the preceding claims, comprising passive elements (P1) stacked along the first longitudinal axis, surrounding the transducers of the second set and having at least one radial mode having a resonant frequency, called radial frequency, equal to a radial frequency of the transducers of the second set plus or minus 0.1 x fr2, advantageously equal to a radial frequency of the transducers of the second set plus or minus 0.05 x fr2, with fr2 being the radial frequency of the transducers of the second set and also having at least one cavity mode having a resonant frequency, called cavity frequency, within the first frequency band.

6. The acoustic antenna according to claim 5, wherein the passive elements are made of a material such that the E/p ratio of this material is higher than that of the material forming the transducers of the second set, with E being the Young's modulus and ρ being the density of the materials.

7. The acoustic antenna according to claim 6, wherein the passive elements are cylinders having a diameter that is greater than that of the transducers of the second set.

8. The acoustic antenna according to one of the preceding claims, wherein the transducers are FFR ("Free-Flooded Ring") transducers made of piezoelectric ceramic or of magnetostrictive ceramic or of electrostrictive ceramics.

9. The acoustic antenna according to one of the preceding claims, wherein the transducers of the first set and of the second set have a circular, trapezoidal or polygonal cross section.

10. The acoustic antenna according to one of the preceding claims, comprising at least a third set of at least two transducers (T3) stacked along K longitudinal axes (A2, A3) parallel to the first longitudinal axis (A1), with K being greater than 1, the transducers of the third set having at least one radial mode having a resonant frequency, called radial frequency, as well as a cavity mode having a resonant frequency, called cavity frequency, equal to the radial frequency of the transducers of the second set plus or minus (fr2-fc2)/10, with fr2 being the radial frequency of the transducers of the second set and fc2 being the cavity frequency of the transducers of the second set, the transducers of the third set being configured to transmit sound waves in a third continuous frequency band extending at least between their cavity frequency and their radial frequency, the third frequency band having at least one frequency higher than the frequencies of the first and second frequency bands, and the convergence of the first, second and third frequency bands forming a continuous frequency band.

11. The acoustic antenna according to claim 10, wherein the K longitudinal axes are coincident with the first longitudinal axis.

12. The acoustic antenna according to any of the preceding claims, comprising at least one first phase-shifter (D1) arranged so as to introduce a first phase shift (Δϕ1) between an excitation signal of the transducers of the first set and an excitation signal of at least one sub-group of transducers of the second set.

13. The acoustic antenna according to claim 12, also comprising at least one second phase-shifter (D2) arranged so as to introduce a second phase shift (Δϕ2) between excitation signals of various sub-groups of transducers of the second set.

14. The acoustic antenna according to one of the preceding claims, comprising N+1 groups of transducers of the same type and N phase-shifters arranged so as to introduce a phase shift between an excitation signal of the transducers of the first group and an excitation signal of another group, with N being an integer greater than 1.

15. A method for calibrating an acoustic antenna according to one of claims 12 to 14, **characterised in that** it comprises the following steps:
a. exciting a first group of transducers of the same type and short-circuiting the other transducers;
b. far-field measuring the phase of the pressure waves generated by the transducers of the first group;
c. exciting a second group of transducers of the same type and short-circuiting the other transducers;
d. far-field measuring the phase of the pressure waves generated by the transducers of the second group;
e. computing the difference in phase between the phase obtained in step b and the phase obtained in step d;
f. setting a phase-shifter so that it introduces a phase shift equal to the difference computed in step e in the excitation signal sent to the transducers of the second group.
